# EUROPEAN PATENT SPECIFICATION

(11) **EP 3 499 323 B1**
(45) Date of publication and mention of the grant of the patent: **15.11.2023**
(21) Application number: 18212945.2
(22) Date of filing: 17.12.2018
(51) Int. Cl.: G05B 15/02, G01S 13/56, H05B 47/115, H05B 47/19

(54) **BUILDING INFRASTRUCTURE SYSTEM WITH ENHANCED RADAR BASED PRESENCE DETECTION USING RADIO RSSI EVALUATION**
GEBÄUDEINFRASTRUKTURSYSTEM MIT VERBESSERTER RADARBASIERTER PRÄSENZDETEKTION UNTER VERWENDUNG VON FUNK-RSSI-AUSWERTUNG
SYSTÈME D'INFRASTRUCTURE DE CONSTRUCTION AVEC UNE MEILLEURE DÉTECTION DE PRÉSENCE BASÉE SUR RADAR À L'AIDE D'UNE ÉVALUATION RSSI RADIO

(30) Priority: 18.12.2017 GB 201721560
(43) Date of publication of application: 19.06.2019
(73) Proprietor: Tridonic GmbH & Co. KG, 6850 Dornbirn (AT)
(72) Inventor: Bakk, Istvan, 2045 Torokbalint (HU); Contala, Urban, 9262 Rogasovci (HU)
(74) Representative: Beder, Jens

(56) References cited:
- US-A1- 2012 235 579
- US-A1- 2015 006 463
- US-A1- 2017 328 995
- US-B1- 9 678 559

## Description

The invention relates to a building infrastructure system and a building infrastructure device comprising a radio receiver for communication and a radar presence sensor integrated into the building infrastructure device and achieving an improved presence detection capability.

Typical building infrastructure systems such as lighting systems include actuators arranged in a distributed manner over a facility and being connected over a communication network with one or more control devices and distributed sensors. In case of a lighting system, luminaires are attached in a grid arrangement to the ceiling covering the rooms and aisles of the facility. The luminaires can be switched on and off by a control device based on a demand for lighting determined based on a sensed presence of individuals in the rooms and aisles.

US 2012/235579 A1 discloses detecting presence and absence of an occupant and generating an occupancy sensor signal representative of an active state in which the presence of the occupant is detected and an inactive state in which the absence of the occupant is detected. An ambient light sensor detects the ambient light level and generates an ambient light sensor signal representative of the ambient light level. Dimmable illumination is generated at a first dimming level, based on the ambient light level, corresponding to the active state and a second dimming level corresponding to the inactive state. The first dimming level, the second dimming level, and/or the transition delay time may be variably set or controlled locally or via a remote device.

US 9,678,559 B1 discloses a decision engine executing on an electronic device that determines using sensor data captured by multiple sensors of the device, whether a user is present in an environment that includes the device. If the user is determined to be present in the environment, If the decision engine cannot make a determination based on the sensor data, a context engine may adjudicate the user presence determination.

US 2017/328995 A1 describes methods, devices, and systems for determining locations of a plurality of electronic devices within a home. In one aspect, a method is performed at a computing system having one or more processors and memory. The method includes: obtaining device identification information for a plurality of electronic devices; broadcasting, via a standard wireless communication protocol, a request based on the device identification information that a particular electronic device of the plurality of electronic devices be enabled to transmit or reflect location information using a radar technique; receiving a signal from the particular electronic device, the signal indicating a location of the particular electronic device using a radar technique; and determining the location of the particular electronic device based on the received signal.

US 2015/006463 A1 describes systems and methods for predicting and/or detecting occupancy of an enclosure, such as a dwelling or other building, which can be used for a number of applications. An a priori stochastic model of occupancy patterns based on information of the enclosure and/or the expected occupants of the enclosure is used to pre-seed an occupancy prediction engine. Along with data from an occupancy sensor, the occupancy prediction engine predicts future occupancy of the enclosure. Intelligent lighting sensors are nowadays often based on passive infrared sensors (PIR sensor), sometimes also active radio detection and ranging sensors (radar sensors) are employed. Both types of sensors provided high sensitivity, however these sensors come to their limits when a person is sitting in an office and executing tasks such as reading, typing or watching a video without making extensive movements. PIR sensors are configured to detect changes in heat flux and therefore in particularly may fail in detecting continuing presence of a group of persons in a conference room when people are watching a screen without moving. Given this case, the control device will switch off the light in the conference room assuming the conference room not being occupied any longer.

Radar sensors may offer an improved sensitivity over PIR sensors even for small movements of persons, however radar sensors require complex signal processing in order to benefit from these advantageous characteristics and also require additional space for an antenna of increased size in order to realize high spatial selectivity of the radar sensor. These requirements make radar sensors expensive and also affect degrees of freedom for designing respective luminaires integrating such a radar sensor.

Nevertheless, using presence sensors in conjunction with lighting systems and to control the lighting system based on actual presence of persons and not merely detecting motion of persons offers benefits in terms of energy consumption and accordingly is an important target in developing future lighting systems.

It is to be noted, that the issues discussed with respect to luminaires and lighting systems equally apply in case of other examples of building infrastructure systems such as automated control of window shutters, security systems, temperature and room air conditioning control. The explanations given hereafter nevertheless will use the lighting system as a preferred example.

Thus, the technical problem of improving the detection characteristics for detecting the presence of a person in a building infrastructure system at competitive expenditure is to be addressed.

The building infrastructure device according to independent claim 1, as well as the building infrastructure system and the method for controlling the building infrastructure system according to the corresponding independent claims define advantageous solutions to the technical problem.

The building infrastructure device in the first invention comprises at least one actuator module, in particular a lighting module such as an LED module, a communication unit including a radio receiver and a radar sensor. The building infrastructure device further includes a processor configured to analyse a signal indicating a received signal strength provided by the radio receiver to generate a first analysis signal, to analyse a received radar signal provided by the radar sensor to generate a second analysis signal, and to evaluate the first and second analysis signal in combination for generating a presence signal indicating the presence of a person.

According to the second invention, a building infrastructure system comprises at least one building infrastructure device, a control unit with a processing device, a communication network for linking the at least one infrastructure device and the control unit. The processing device is configured to analyse a signal indicating a received signal strength provided by a radio receiver of the at least one building infrastructure device to generate a first analysis signal, to analyse a received radar signal provided by a radar sensor of same or another the building infrastructure device to generate a second analysis signal, and to evaluate the first and the second analysis signal in combination for generating a presence signal indicating the presence of a person.

The building infrastructure device according to the first invention and the building infrastructure system according to the second invention provide improved presence detection characteristics for detecting persons. By using the first analysis signal based on a change in a variation of the signal indicating the received signal strength enables to determine early that a person is present even before the second analysis signal generated based on an analysis of the radar signal starts to increase. Thus, presence detection does not exclusively rely on evaluating a radar signal output by the radar sensor with its limited field of view. Due to combined evaluation of the first and second analysis signals early and reliable detection of the presence of the person is possible. Even a person with only reduced radar cross section and almost no motion and thereby only small radar signal signature can be more reliably detected by applying the invention. On the other hand, simpler and less sensitive radar sensors may be used which are cheaper to acquire, their respective lack in sensitivity being more than outweighed by the additional gain by analysing the signal indicating a received signals strength from the radio receiver and taking result of the analysis into account for evaluation and presence determination.

The dependent claims provide further advantageous embodiments of the building infrastructure device and the building infrastructure system.

Preferably the radio receiver of the building infrastructure system is configured to communicate with the control unit.

Using the signal indicating a received signal strength of the radio receiver present in the building infrastructure device not only for communication but also for improving the presence detection in the surroundings of the building infrastructure device provides a combinatory effect of improving the reaction time of the radar based presence sensor and the probability of detection without needing to add complex radar signal processing and further dedicated presence sensors to the building infrastructure system.

An advantageous embodiment of the building infrastructure system is characterized in that a communication frequency band used by the radio receiver and a radiated frequency band of the radar sensor differ in particular differ in frequency by at least one order of magnitude.

If the radio frequencies of the radio receiver, for example in the band from 2400 MHz to 2500 MHz, and of the radar receiver, for example in the band from 24000 MHz to 24250 MHz are sufficiently distinguished, a further diversity gain is achieved as frequency dependent statistical effects in the radio channel and the radar channel are not correlated with each other, but become independent. The design engineer therefore has further degrees in freedom when tackling the problems of detection probability, false detection rate and radar power, as long as the spacing between the radio receiver frequency band and the radar sensor frequency band is large enough.

A particularly advantageous embodiment of the building infrastructure system comprises a plurality of building infrastructure devices arranged in a grid over a coverage area, which is the area for which presence detection shall be performed.

Arranging the building infrastructure devices in a grid covering the entire area to be covered by the actuators of the building infrastructure system provides the effect, that the first analysis signal including a first probability of presence is available for many subsectors of the entire area monitored, and as well a second analysis signal including a second probability of presence is available at the same subsectors of the entire monitored area. Accordingly, for combined evaluation of the first and second analysis signals, a comprehensive set of information with a high spatial resolution of the individual pieces of presence information is available. It becomes possible to precisely distinguish between presence in corridors and rooms only separated by sheets of glass for example in order to precisely control the building infrastructure system according to the presence of individual persons. A most cost effective running of the building infrastructure system at simultaneously high acceptance of the building infrastructure system is to be expected.

Preferably the building infrastructure system is a lighting system comprising a plurality of luminaires as building infrastructure devices.

The invention is particularly advantageous for lighting systems, as a high spatial resolution and high reliability in detecting presence of person and not merely motion is advantageous to realize a smart lighting system at modest operating cost. Therefore the advantages of the invention for lighting systems are high, while due to the distribution of elements of the lighting system over the entire building the possibilities of implementing the invention without adding further hardware are also advantageously high, as lighting devices with presence sensors and radio receivers in their communication means become more widespread.

In a particularly advantageous embodiment the signal indicating a received signal strength is a received signal strength indicator (RSSI) signal determined and output by the radio receiver.

Integrated radio receivers for communication are widely available at small cost and often include means for determining and outputting an RSSI signal. The inventive approach for generating the first analysis signal uses accordingly a signal already available in advanced building infrastructure systems with a wireless communication capability for generating an additional and most advantageous effect of enhancing the presence detections capability of the building infrastructure system without having to use an additional sensor, for example a acoustic presence sensor or PIR sensor and to fuse the data of the additional sensor with the data acquired via the radar sensor. The "additional sensor" is realized by adding new signal processing features to a radio receiver and a radio receiver signal already present in the building infrastructure device.

The processor of the first and second inventions is configured to determine a variation of the signal indicating a received signal strength and to generate the first analysis signal based on a change in the detected variation.

Preferably the processor is configured to interpret a change, in particular an increase, in the variation of the signal indicating a received signal strength exceeding a threshold as an increase of a probability of presence of at least one person.

Determining the variation of the signal indicating a received signal strength enables to detect changes in a wireless communication channel which may be caused by the presence of individuals in the proximity of an antenna connected to the radio receiver and used for receiving signals. By determining a change in variation an immediate, almost real-time indication for an increased probability of the presence of the person is available for the presence detection. The rapid availability is particularly advantageous in combination with a radar sensor signal which usually provides a high probability of detection of presence with time delay due to radar signal processing, for example by integrating over two or more repetition periods, in case of a frequency modulated continuous wave (FMCW) type radar.

The building infrastructure system according to an advantageous embodiment has the processor configured to use scaling and/or machine learning and/or neural networks for evaluating the first and second analysis signals in combination.

In particular when using a plurality of infrastructure devices arranged in a grid, for example also extending over multiple rooms and corridors, plural first and second analysis signals from each of the infrastructure devices are available at the processor. When using processing techniques such as scaling, machine learning or neural networks, possibly further using data from previous time periods and presence/no-presence situations, the reliability of presence detection may be further improved.

Additionally the processor can be configured to associate a weighting factor each to the first and to the second analysis signal when evaluating the first and the second analysis signals in combination to generate the presence signal.

An embodiment of the building infrastructure system comprises a data storage configured to store the obtained signals indicating the received signal strength associated with the received radar signals of a plurality of building infrastructure devices and further associated with the presence signal as historic data. The processing unit refers to the stored historic data for evaluating the obtained signal indicating the received signal strength in combination with the received radar signal and generates the presence signal taking into account the historic data.

Storing and using the historic data enables to increase the probability of a reliable detection of the presence of persons and to avoid false presence detections, as data from previous use situations of the rooms and corridors of the monitored facility become available for signal interpretation and signal evaluation.

According to a third aspect a method for controlling a building infrastructure system solves the technical problem. The building infrastructure system comprises at least one building infrastructure device, a control device with a processor and a communication network for linking the at least one building infrastructure device and the control device. The method solves the technical problem by the processor executing steps of analysing a signal indicating a received signal strength provided by a radio receiver of the building infrastructure device to generate a first analysis signal, analysing a received radar signal provided by a radar sensor of the building infrastructure device to generate a second analysis signal and of evaluating the first and the second signals in combination for generating a presence signal indicating the presence of a person.

These and other aspects of the invention become apparent from the detailed description of an embodiment discussed with reference to the enclosed figures, in which
- Fig. 1: shows a lighting system according to an embodiment,
- Fig. 2: depicts a general layout of a luminaire according to an embodiment, the luminaire integrating a presence sensor and communication module,
- Fig. 3: depicts examples of RSSI signals provided by radio receivers,
- Fig. 4: depicts an exemplary radar signal provided by a radar sensor in an indoor environment,
- Fig. 5: depicts the effect of motion on the RSSI signals provided by a radio receiver, and
- Fig. 6: shows a flowchart with steps of determining the presence of a person according to an embodiment.

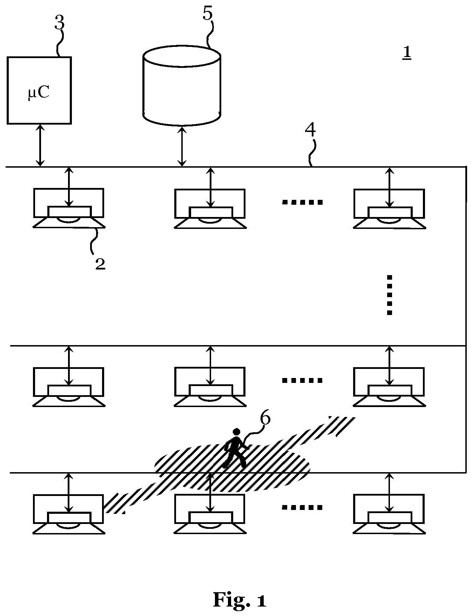

Fig. 1 shows schematically a lighting system 1 according to an embodiment of the invention. The lighting system 1 is one example for a building infrastructure system according to the invention.

The lighting system comprises a plurality of luminaires (lighting devices) 2 which are arranged in a grid over an area which is to be illuminated by light emitted by the luminaires 2. The grid may be a regular grid or an irregular grid. The light emission by the luminaires 2 is controlled by a control device 3. The control device 3 includes a processor. The processor runs a program or a plurality of programs in order to determine which of the luminaires 2 are to be switched on, switched off or how much light is to be emitted by a luminaire 2 or group of luminaires, which is switched on.

The control device 3 may control the luminaires 2 based on signals received from on/off-switches, dimming switches, ambient light sensors omitted from figure 1 for sake of conciseness.

Power supply to the luminaires 2 and the control device 3 are also omitted from figure 1.

The luminaires and the control unit exchange status and control signals over a communication network 4. The communication network 4. The communication network 4 may be a wired network or preferably a wireless network. The communication network may be based on a bus system or any other network topology. The communication network 4 may for example based on an internet protocol (IP).

The control device 3 accordingly includes communication means for transmitting signals to the luminaires 2 and receiving signals from the luminaires 2 via the communication network 4.

The communication network 4 can further connect a data storage 5. The data storage 5 of one embodiment forms part of the control device 4 or be an external data storage device 5 connected via the communication network 4 or another communication means.

According to the invention, the luminaires 2 are controlled by the control device 3 based on a determined presence of individuals (persons) 6 in the area covered by the grid of luminaires 2. The presence of persons 6 is determined by the control device 3 based on an evaluation of a first analysis signal and a second analysis signal. The first analysis signal is generated by the processor based on an analysis of a signal indicating a received signal strength of a radio receiver of a luminaire 2. The signal indicating a received signal strength of a radio receiver of the luminaire 2 is obtained by the control device 3 via the communication network 4 from the luminaire 2.

A second analysis signal is generated by the processor based on an analysis of a radar signal from a radar sensor of the luminaire 2. The radar signal of the luminaire 2 is obtained by the control device 3 via the communication network 4 from the luminaire 2.

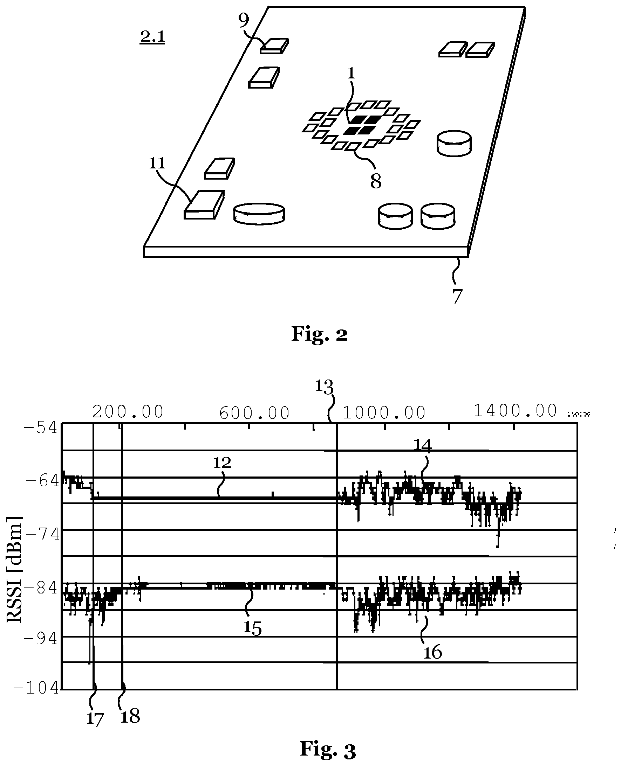

A general layout of a luminaire 2 according to an embodiment is shown in fig. 2. The luminaire 2 integrates a presence sensor 10 and a communication interface 3 with a lighting module 8 on a single printed circuit board 7.

The depicted luminaire 2 omits any reference to specific design features and concentrates on key functional elements arranged on the printed circuit board 7. The depicted luminaire 2 includes a lighting module 8 in form of an LED module with the communication interface 3 and the presence sensor 10 as a radar presence sensor, for example a CW or FMCW radar sensor.

Not shown in fig. 2 are components of the luminaire 2 such as a housing, power supply, a wired communication interface or an ambient light sensor.

The lighting module 8 is shown as an LED module comprising a plurality of light emitting diodes (LED) for emitting light. Additionally or alternatively, the luminaire 2 may comprise additional lighting modules or lighting modules using another lighting technology, for example gas discharge lamps.

The wireless communication interface 9 may comprise one or more wireless transceivers connected to an RF front end, which includes for example a power amplifier, one or more communication antennas, possibly a low noise amplifier, signal mixing stages and a radio receiver (wireless receiver).

The wireless communication interface 9 can be configured to transmit and receive signals to other luminaires 2 and lighting control equipment such as the control device 3, on/off-switches, dimming switches or external presence sensors using a wireless communication protocol.

Alternatively, the wireless communication interface 9 may be adapted to perform wireless communication using plural different wireless communication protocols.

Examples of wireless communication protocols include protocols for wireless personal area networks (WPAN), for example as standardized under IEEE 802.15, such as IEEE 802.15.1 corresponding to international standard Bluetooth^{™} of Bluetooth SIG, or IEEE 802.15.4 for low data rate data transmission forming the basis for communication networks under the ZigBee specification.

The wireless communication interface is preferably configured to transmit and receive signals in a frequency band such as a frequency band dedicated to industrial, scientific and medical (ISM) applications. In particular, but not exclusively, the wireless communication device may operate in an ISM band between 2400 and 2500 MHz. Additionally or alternatively, the wireless communication interface may operate in in the ISM band between 6765 and 6795 MHz.

The antenna of the wireless communication interface may preferably have a wide radiation characteristic or near omnidirectional radiation characteristic.

The radio receiver of the wireless communication interface 9 preferably includes a specific received radio signal strength indicator output (RSSI output) for outputting a signal indicative of a signal level of the received radio signal.

Alternatively of additionally, the wireless communication interface 9 includes measurement means for measuring a signal strength of the received radio signal level at the input of the radio receiver.

The signal indicative of the received radio signal strength may be a DC signal with an analogue signal level depending on the signal level value of the received radio signal at the input of the radio receiver.

The luminaire 2 further includes the presence sensor 10. Generally, a presence sensor 10 acts as an electronic motion detector and contains an optical, microwave, or acoustic sensor, and may comprise a transmitter for illuminating a surveillance area to be monitored. The presence sensor 10 senses a signature from a moving object such as a person 6 in a surveillance area via reflection of electromagnetic energy emitted by the transmitter of the presence sensor 10 and reflected by the object. Presence sensors 10 using the radar principle for lighting control application are generally well known. Typical low-cost radar sensors can detect up to distances of at least 4 to 5m. Specialized radar sensors are more expensive due to more complex waveforms of the emitted electromagnetic radar signal and the more complex signal processing of the received electromagnetic radar signal, but can provide a much longer detection range up to 20 m. The radar sensor can cover larger areas because the electromagnetic radio waves are at frequencies which penetrate walls and obstructions such as sheets of glass, which for example, separate offices from corridors in an office building.

The radar sensor detects motion through the principle of Doppler radar. A continuous electromagnetic wave is emitted by a radar transmitter of the radar sensor, and phase shifts in the reflected and received electromagnetic wave due to motion of an object relative to the radar receiver result in a heterodyne signal including information on the relative movement of radar sensor and reflecting object. When using a frequency modulation on a continuous wave signal emitted by the radar transmitter, the received reflected continuous wave signal may also be evaluated in order to provide a range information on a distance between the radar sensor and the reflecting object.

The radar sensor used as presence sensor 10 may operate at radar frequencies in the ISM band, preferably in an ISM-band between 24000 and 24250 MHz.

The radial resolution of the radar sensor depends on a radar antenna aperture of the radar antenna and is accordingly limited by design considerations for the luminaire 2 and available space when integrating the radar sensor with the luminaire 2 as shown in fig. 2.

The advantageous effects of the radar sensor result largely from a radar signal processing of the received electromagnetic radar signal, however the signal processing also requires processing resources in a microprocessor and data storage volume in a main storage area. Furthermore, the radar sensor may suffer from a significant time delay due to the radar signal processing until a detection result is output in a radar sensor signal for further processing in a lighting control unit.

A delay in radar signal processing may also result from integrating a received radar signal over two or more radar signal repetition periods in order to improve radar signal-to-noise-noise ratio prior to applying the received and processed radar signal to a detection threshold for detecting an object in an area surveyed by the radar sensor.

In fig. 3, examples of signals indicative of a received signal strength (RSSI signals) provided by two radio receivers are shown. The examples show measured values for a signal indicating a received signal strength at the input of a first radio receiver and of a second radio receiver. The radio receivers may be for example radio receivers of a communication system based on a communication standard such as Bluetooth Low energy (BLE) or according to a wireless personal area network communication protocol such as 802.15.4. It is to be stated, that the received signal strength levels depicted in fig. 3 are measured using a normal signal traffic for maintaining a connection but without using any dedicated measurement signal specifically adapted to determining the influences of persons 6 in the circumference of the radio receivers and their correspondingly connected receive antennas on the radio channel used.

The signal in the upper part of Fig. 3 is shown as a RSSI value in dBm over a time series of measurements. In a first portion 12 of the upper, first RSSI signal, only small variations of the upper RSSI signal around an intermediate signal level are visible. This changes at a point in time 13, at which a second portion 14 of the RSSI signal starts. In the second portion 14 of the upper RSSI signal, the signal variation is significantly increased when compared to the signal variation in the first portion 12 of the upper RSSI signal.

The first portion 12 of the upper RSSI signal represents a time interval in which no persons are present in an area adjacent to the first radio receiver. The second portion 14 of the upper RSSI signal represents a further time interval in which persons 6 are continuously present in the area adjacent to the first radio receiver. The presence of one or more persons 6 results in changes in the characteristics of the electromagnetic radio propagation around an antenna connected to the first radio receiver. The presence of persons 6 thereby influences a received radio signal and its measurable radio signal strength.

A corresponding finding applies to a second, lower RSSI signal depicted in the lower part of fig. 3. The second RSSI signal comprises a first portion 15 of the second RSSI signal with only small variations of the second RSSI signal around second intermediate signal level. This changes at the point in time 13. In the second portion 16 of the second RSSI signal, the signal variation is significantly increased when compared to the signal variation in the first portion 15 of the second RSSI signal.

The first portion 15 of the second RSSI signal represents a time interval in which no persons are present in the area adjacent to the second radio receiver. The second portion 16 of the RSSI signal represents a further time interval in which persons 6 are continuously present in the area adjacent to the second radio receiver.

The second RSSI signal differs measurably from the first RSSI signal in the upper portion of fig. 3 in that the signal variation of the second RSSI signal is in a time interval between a second point in time 17 and a third point in time 18 significantly larger than a signal variation in the first portion 12 of the first RSSI signal.

The noted difference in the signal variation of the first RSSI signal and the second RSSI signal between the second point in time and the third point in time 18 results from a distinct spatial arrangement of the first and the second radio receiver and the respectively different presence of persons in a first area adjacent to the first radio receiver and a second area adjacent to the second radio receiver. Accordingly, the RSSI signals output by the first radio receiver and the second radio receiver respectively enable to gain additional information for detecting presence of persons in an area adjacent to the corresponding radio antennas connected with the first radio receiver and the second radio receiver.

The first and the second RSSI signal are usually available for customary radio receivers as for example integrated radio receiver circuits often already include an RSSI signal output outputting an RSSI signal indicating a received signal strength at a receiver input. The signal indicating a received signal strength offers the advantage of reacting immediately to any change in a measured value for the received signal strength at the receiver input of the radio receiver. In particular, there is no significant processing delay in the radio receiver for providing the signal indicating the received signal strength at the RSSI signal output.

The RSSI signal can be a signal with analogue DC signal level encoding the received signal strength at the receiver input.

The RSSI signal can be determined in an intermediate frequency stage before an intermediate frequency amplifier stage of the radio receiver. For a radio system without an intermediate frequency level, the RSSI signal can be determined in the baseband signal chain before a baseband amplifier stage of the radio receiver.

The RSSI signal conveys information of radio propagation characteristics of the radio channel also including effects due to presence of persons 6. It is to be noted that this information is dependent on the radio channel at the communication frequency at which the radio receiver is actually receiving signals. This radio channel may be situated in an ISM band, for example in the ISM band ranging from 2400 to 2485 MHz.

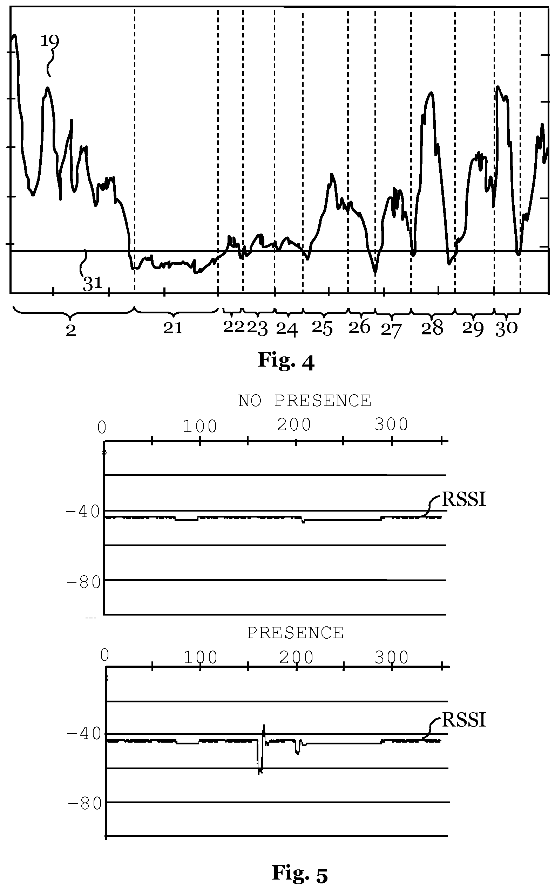

Fig. 4 depicts an exemplary radar signal provided by the radar sensor in an indoor environment. The radar signal provided by the radar sensor is shown with its signal level on the ordinate over time depicted on the abscissa of the diagram.

The radar signal shows radar signal values in dependence from different actions and movements of a person 6 in an office in a building. The radar sensor is suitably arranged to monitor the office space, for example on the ceiling of the office. In the office a person 6 is executing specific actions which are reflected in the level and level variations of the depicted radar sensor signal 19. Examples for such specific actions and the resulting signal are given below.

In a first time interval 20 the person 6 is walking from a shelf inside the office to an office door.

In a second time interval 21 the person is standing almost motionless at the office door.

In a third time interval 22 the person takes two steps to the right.

In a fourth time interval 23 the person raises an arm.

In a fifth time interval 24 the person shrugs its shoulders.

In a sixth time interval 25 the person takes two steps to the right.

In a seventh time interval 26 the person raises an arm.

In an eighth time interval 27 the person takes two steps to the right.

In a ninth time interval 28 the person raises an arm.

In a tenth time interval 29 the person is walking inside the office.

In an eleventh time interval 30 the person raises an arm.

When taking a closer look at the second time interval 21 and even the third, fourth and fifth time interval 22, 23, 24 and the shown radar signal 19 in these intervals, it becomes apparent that the radar signal level not only has large dynamic signal level range, but also fails to securely detect a person standing motionless or only performing small motions, possibly at positions not optimally situated with respect to the radar sensor location. In particular in the successive third, fourth and fifth time intervals a lighting module 8 of the luminaire 2 may be switched off due to assuming that no person is present in the area illuminated by the luminaire 2.

Reducing a threshold level for detecting the presence of the person 6 from the radar signal 19 would otherwise increase the probability of false presence detections due to noise.

However combining the analysis of the signal indicative of a received signal strength with an analysis of the radar signal according to the invention is suitable to overcome this problem.

According to the invention a second probability of a person 6 being present may be calculated from the radar signal and output in a second analysis signal for further evaluation.

In particular, the processor may feed the obtained radar signal to two integrating filters each, one integrating filter with a first time constant and a second integrating filter with a second time constant, wherein the first time constant is smaller than the second time constant. The higher the difference between an output signal of the first integrating filter and an output signal of the second integrating filter, the higher is a probability that a person 6 is present in the area monitored by the radar sensor.

Fig. 5 depicts the effect of motion on the RSSI signal provided by the radio receiver. In the upper fig. 5 the RSSI signal is shown for the radio receiver when no person is present in an area adjacent to the antenna connected with the radio receiver. The depicted RSSI signal fluctuates around an RSSI signal level value of about -45 dB. Comparing the signal variation of the upper fig. 5 with the RSSI signal level for a person being present in the area near to the antenna connected with the radio receiver, a change in signal level fluctuation of the RSSI signal is to be noted for a normalized time of about 165 and a further smaller change in signal level fluctuation of the RSSI signal is to be noted for a normalized time of about 200.

According to the invention, the processor analyses the signal indicating a signal level strength (RSSI signal) and generates a first analysis signal based on the analysis of the signal indicating a signal level strength.

In particular, the processor may feed the obtained signal indicating a signal level strength to two integrating filters each, one integrating filter with a first time constant and a further integrating filter with a second time constant, wherein the first time constant is smaller than the second time constant.

According to one embodiment the integrating filters may be implemented by a first moving average routine inside a second moving average routine. The higher the difference between an output signal of the integrating filter and an output signal of the second integrating filter, the higher is a probability that a person 6 is present in the area adjacent to an antenna of the radio receiver.

According to the invention a first probability of a person being present is calculated from the signal indicating a receiver signal level strength and output in a first analysis signal for further evaluation.

The processor performs a combined evaluation of the first analysis signal and the second analysis signal by determining if within an evaluation time frame the probability of presence of a person 6 increases in the first analysis signal, which bases on the signal indicating a receiver signal level strength and the increase in probability in the first analysis signal is succeeded by an increase in probability of presence of a person 6 in the second analysis signal, the second analysis signal basing on a radar signal, then the processor determines an increased general probability of presence. Accordingly the presence signal output by the processor for performing lighting control includes an increased probability of presence for the luminaire 2, whose signal indicating a receiver signal level strength and radar signal formed the input for the analysis and evaluation by the processor.

Thus either the sensitivity of the presence detection is increased, or the signal-to-noise ratio is increased for the radar signal by the inventive processing.

Taking an entire lighting system 1 with multiple luminaires 2 into consideration, the overall system performance will be increased. The improvement of the presence detection may be used for an increased sensitivity of the lighting system with respect to presence detection capability or alternatively used for reducing the rate of false presence detections by the lighting system 1.

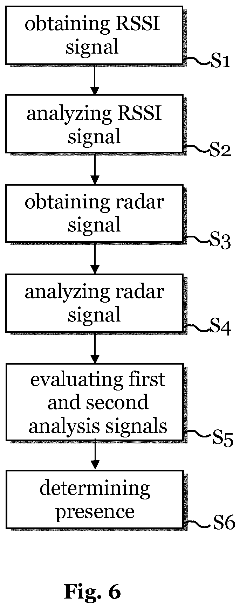

In fig. 6, a flowchart with steps of determining the presence of a person according to an embodiment of the invention is shown. The method is discussed with respect to a lighting system 1 with at least one luminaire 2 as an example of a building infrastructure system. The building infrastructure system comprises at least one luminaire 2, a control device 3 with a processor and a communication network 4 for linking the at least one luminaire 2 and the control device 3 to each other. The method for controlling a lighting system 1 and determining the presence of the person 6 starts with a step S1.

In step S1 the processor obtains at least one RSSI signal from a radio receiver.

In a subsequent step S2, the obtained RSSI signal is analysed. The result of analysing the RSSI signal is used to generate a first analysis signal. In particular, a signal indicating a received signal strength provided by the radio receiver of the luminaire is analysed to generate the first analysis signal.

In step S3 the processor obtains at least one radar signal from a radar sensor 10 of the luminaire 2.

In a subsequent step S4, the obtained at least one radar signal is analysed. The result of analysing the radar signal is used to generate a second analysis signal. In particular, the radar signal provided by the radar sensor 10 of the luminaire 2 is analysed and a second analysis signal is generated based on the result of the analysis of the radar signal.

The steps S1, S2, S3 and S4 may be executed consecutively in the processor. Alternatively, steps S1 and S3 and steps S3 and S4 may be executed partially in parallel or fully parallel in time. The steps S1, S2, S3 and S4 may be performed by a single processor arranged in a central control device 3 of the lighting system 1 or alternatively be executed in a distributed processing device, for example plural processing devices may be arranged in luminaires 2 and linked via the communication network 4.

The first analysis signal and the second analysis signal are evaluated in a step S5 succeeding to steps S1, S2, S3 and S4.

In step S6 succeeding to step S5, the method determines based on the evaluation results of step S5, if a person is present in the monitored area of the at least one luminaire 2 and the result of the determination is output in a presence detection signal.

The presence detection signal may then be used subsequently for switching on the at least one luminaire 2 in case of newly detecting the presence of a person 6 in the monitored area, of continuing to illuminate the monitored area covered by the luminaire 2 in case of detecting a continued presence of the person 6 in the monitored area or switching off the at least one luminaire 2, when no person is detected in the monitored area.

The described embodiments focus on a lighting system 1 for discussing the invention and its advantages. It is evident, that any other building infrastructure system may benefit from the claimed invention and is respectively claimed in the attached patent claims defining the invention.

## Claims

1. Building infrastructure device comprising
at least one actuator module (2), in particular a lighting module, that is controlled in response to a presence signal indicating a presence of a person (6),
a communication unit (9) including a radio receiver,
a radar sensor (10) comprising,
a radar transmitter and
a radar receiver;
wherein the building infrastructure device is
**characterized in**
**that** a processor of the building infrastructure device is configured to
analyse a signal indicating a received signal strength provided by the radio receiver for detecting the presence of the person based on a change in a variation of the signal indicating the received signal strength to generate a first analysis signal, to
analyse a received radar signal provided by the radar sensor (10) for detecting motion based on the Doppler principle to generate a second analysis signal, and to
evaluate the first and the second analysis signal in combination for generating the presence signal indicating the presence of the person (6) by determining an increased general probability of the presence of the person if within an evaluation time frame an increase in probability of presence of the person increases in the first analysis signal, is succeeded by an increase in probability of presence of the person in the second analysis signal.

2. Building infrastructure system comprising
at least one building infrastructure device (2),
a control device (3) with a processor, wherein the control device (3) includes
a communication means for transmitting signals to the at least one building infrastructure device (2) and for receiving signals from the at least one building infrastructure device (2) via a communication network (4), and
wherein the control device (3) is configured to control the at least one building infrastructure device based on a presence signal indicating presence of a person, and
the communication network (4) for linking the at least one infrastructure device (2) and the control device (3), and the building infrastructure system is
**characterized in**
**that** the processor is configured to
analyse a signal indicating a received signal strength provided by a radio receiver of the at least one building infrastructure device (2) for detecting the presence of the person based on a change in a variation of the signal indicating the received signal strength to generate a first analysis signal, to analyse a received radar signal provided by a radar sensor of the at least one building infrastructure device (2) for detecting motion based on the Doppler principle to generate a second analysis signal, and
evaluate the first and the second analysis signals in combination for generating the presence signal indicating a presence of the person (6) by determining an increased general probability of the presence of the person if within an evaluation time frame an increase in probability of presence of the person increases in the first analysis signal and is succeeded by an increase in probability of presence of the person in the second analysis signal.

3. Building infrastructure system according to claim 2,
**characterized in**
**that** the radio receiver is used by a communication unit (9) of the at least one building infrastructure device (2) for communicating with the control unit (3).

4. Building infrastructure system according to claim 2 or 3,
**characterized in**
**that** a communication frequency band of the radio receiver and a radiated frequency band of the radar sensor (10) differ, in particular differ by at least one order of magnitude in frequency.

5. Building infrastructure system according to one of claims 2 to 4,
**characterized in**
**that** the building infrastructure system comprises a plurality of building infrastructure devices (2) arranged in a grid over a coverage area of the building infrastructure system.

6. Building infrastructure system according to one of claims 2 to 5,
**characterized in**
**that** the building infrastructure system is a lighting system (1) comprising a plurality of luminaires (2) as the building infrastructure devices.

7. Building infrastructure system according to one of claims 2 to 6,
**characterized in**
**that** the signal indicating a received signal strength is a RSSI signal measured and output by the radio receiver.

8. Building infrastructure system according to any of claims 2 to 7 **characterized in**
**that** the processor is configured to use scaling for evaluating the first and the second analysis signals in combination.

9. Building infrastructure system according to any of claims 2 to 8, **characterized in**
**that** the processor is configured to use machine learning for evaluating the first and the second analysis signals in combination.

10. Building infrastructure system according to any of claims 2 to 9, **characterized in**
**that** the processor is configured to use neural networks for evaluating the first and the second analysis signals in combination.

11. Building infrastructure system according to any of claims 2 to 10, **characterized in**
**that** the processor is configured to associate a weighting factor each to the first and the second analysis signals for evaluating the first and the second analysis signals to generate the presence signal.

12. Building infrastructure system according to any of claims 2 to 11, **characterized in**
**that** the building infrastructure system further comprises a data storage (5) configured to store the obtained signals indicating the received signal strength associated with the received radar signals of a plurality of building infrastructure devices (2) and further associated with the presence signal as historic data, and
**that** the processor is configured to evaluate the first analysis signal in combination with the second analysis signal further taking into account the historic data.

13. Method for controlling a building infrastructure system (1), the building infrastructure system (1) comprising
at least one building infrastructure device (2)
a control device (3) with a processor, including communication means for transmitting signals to the at least one building infrastructure device (2) and for receiving signals from the at least one building infrastructure device (2) via a communication network (4),and
the communication network (4) for linking the at least one building infrastructure device (2) and the control device (3),
the method being **characterized by** the following steps executed by the processor:
analysing a signal indicating a received signal strength provided by a radio receiver of the at least one building infrastructure device (2) for detecting the presence of the person based on change in a variation of the signal indicating the received signal strength to generate a first analysis signal (S2),
analysing a received radar signal provided by a radar sensor (10) of the least one building infrastructure device (2) for detecting motion based on the Doppler principle to generate a second analysis signal (S4),
evaluating the first analysis signal and the second analysis signal in combination for generating the presence signal indicating the presence of the person (6) by determining an increased general probability of the presence of the person if within an evaluation time frame an increase in probability of presence of the person increases in the first analysis signal and is succeeded by an increase in probability of presence of the person in the second analysis signal (S5, S6).

## Patentansprüche

1. Gebäudestrukturvorrichtung, umfassend
mindestens ein Aktuatormodul (2), insbesondere ein Beleuchtungsmodul, das als Reaktion auf ein Anwesenheitssignal gesteuert wird, das eine Anwesenheit einer Person (6) anzeigt,
eine Kommunikationseinheit (9), einschließlich eines Funkempfängers,
einen Radarsensor (10), umfassend,
einen Radarsender und
einen Radarempfänger;
wobei die Gebäudestrukturvorrichtung **dadurch gekennzeichnet ist,**
**dass** ein Prozessor der Gebäudestrukturvorrichtung konfiguriert ist zum
Analysieren eines Signals, das eine empfangene Signalstärke anzeigt, die durch den Funkempfänger zum Erkennen der Anwesenheit der Person basierend auf einer Änderung in einer Variation des Signals, das die empfangene Signalstärke anzeigt, bereitgestellt wird, um ein erstes Analysesignal zu erzeugen, zum
Analysieren eines empfangenen Radarsignals, das durch den Radarsensor (10) zum Erkennen einer Bewegung basierend auf dem Doppler-Prinzip bereitgestellt wird, um ein zweites Analysesignal zu erzeugen, und zum
Auswerten des ersten und des zweiten Analysesignals in Kombination zum Erzeugen des Anwesenheitssignals, das die Anwesenheit der Person (6) durch ein Bestimmen einer zugenommenen allgemeinen Wahrscheinlichkeit der Anwesenheit der Person anzeigt, wenn innerhalb eines Auswertungszeitrahmens eine Zunahme in der Wahrscheinlichkeit der Anwesenheit der Person in dem ersten Analysesignal zunimmt, auf die eine Zunahme in der Wahrscheinlichkeit der Anwesenheit der Person in dem zweiten Analysesignal folgt.

2. Gebäudestruktursystem, umfassend
mindestens eine Gebäudestrukturvorrichtung (2),
eine Steuervorrichtung (3) mit einem Prozessor, wobei die Steuervorrichtung (3) ein Kommunikationsmittel zum Übertragen von Signalen an die mindestens eine Gebäudestrukturvorrichtung (2) und zum Empfangen von Signalen von der mindestens einen Gebäudestrukturvorrichtung (2) über ein Kommunikationsnetzwerk (4) einschließt, und
wobei die Steuervorrichtung (3) konfiguriert ist, um die mindestens eine Gebäudestrukturvorrichtung basierend auf einem Anwesenheitssignal, das die Anwesenheit einer Person anzeigt, zu steuern, und
das Kommunikationsnetzwerk (4) zum Verbinden der mindestens einen Strukturvorrichtung (2) und der Steuervorrichtung (3), und wobei das Gebäudestruktursystem **dadurch gekennzeichnet ist, dass**
der Prozessor konfiguriert ist, zum
Analysieren eines Signals, das eine empfangene Signalstärke anzeigt, die durch einen Funkempfänger der mindestens einen Gebäudestrukturvorrichtung (2) zum Erkennen der Anwesenheit der Person basierend auf einer Änderung in einer Variation des Signals, das die empfangene Signalstärke anzeigt, bereitgestellt wird, um ein erstes Analysesignal zu erzeugen, zum
Analysieren eines empfangenen Radarsignals, das durch einen Radarsensor der mindestens einen Gebäudestrukturvorrichtung (2) zum Erkennen einer Bewegung basierend auf dem Doppler-Prinzip bereitgestellt wird, um ein zweites Analysesignal zu erzeugen, und
Auswerten des ersten und des zweiten Analysesignals in Kombination zum Erzeugen des Anwesenheitssignals, das eine Anwesenheit der Person (6) durch Bestimmen einer zugenommenen allgemeinen Wahrscheinlichkeit der Anwesenheit der Person anzeigt, wenn innerhalb eines Bewertungszeitrahmens eine Zunahme in der Wahrscheinlichkeit einer Anwesenheit der Person in dem ersten Analysesignal zunimmt und auf die eine Zunahme in der Wahrscheinlichkeit der Anwesenheit der Person in dem zweiten Analysesignal folgt.

3. Gebäudestruktursystem nach Anspruch 2,
**dadurch gekennzeichnet, dass**
der Funkempfänger durch eine Kommunikationseinheit (9) der mindestens einen Gebäudestrukturvorrichtung (2) zum Kommunizieren mit der Steuereinheit (3) verwendet wird.

4. Gebäudestruktursystem nach Anspruch 2 oder 3,
**dadurch gekennzeichnet, dass**
sich ein Kommunikationsfrequenzband des Funkempfängers und ein ausgestrahltes Frequenzband des Radarsensors (10) unterscheiden, insbesondere durch mindestens eine Größenordnung in der Frequenz unterscheiden.

5. Gebäudestruktursystem nach einem der Ansprüche 2 bis 4,
**dadurch gekennzeichnet, dass**
das Gebäudestruktursystem eine Vielzahl von Gebäudestrukturvorrichtungen (2) umfasst, die in einem Netz über einen Abdeckungsbereich des Gebäudestruktursystems angeordnet sind.

6. Gebäudestruktursystem nach einem der Ansprüche 2 bis 5,
**dadurch gekennzeichnet, dass**
das Gebäudestruktursystem ein Beleuchtungssystem (1) ist, umfassend eine Vielzahl von Leuchten (2) als die Gebäudestrukturvorrichtungen.

7. Gebäudestruktursystem nach einem der Ansprüche 2 bis 6,
**dadurch gekennzeichnet, dass**
das Signal, das eine empfangene Signalstärke anzeigt, ein RSSI-Signal ist, das durch den Funkempfänger gemessen und ausgegeben wird.

8. Gebäudestruktursystem nach einem der Ansprüche 2 bis 7,
**dadurch gekennzeichnet, dass**
der Prozessor konfiguriert ist, um eine Skalierung zum Auswerten des ersten und des zweiten Analysesignals in Kombination zu verwenden.

9. Gebäudestruktursystem nach einem der Ansprüche 2 bis 8,
**dadurch gekennzeichnet, dass**
der Prozessor konfiguriert ist, um maschinelles Lernen zum Auswerten des ersten und des zweiten Analysesignals in Kombination zu verwenden.

10. Gebäudestruktursystem nach einem der Ansprüche 2 bis 9,
**dadurch gekennzeichnet, dass**
der Prozessor konfiguriert ist, um neuronale Netzwerke zum Auswerten des ersten und des zweiten Analysesignal in Kombination zu verwenden.

11. Gebäudestrukturvorrichtung nach einem der Ansprüche 2 bis 10,
**dadurch gekennzeichnet, dass**
der Prozessor konfiguriert ist, um einen Gewichtungsfaktor jeweils dem ersten und dem zweiten Analysesignal zum Auswerten des ersten und des zweiten Analysesignals zuzuordnen, um das Anwesenheitssignal zu erzeugen.

12. Gebäudestruktursystem nach einem der Ansprüche 2 bis 11,
**dadurch gekennzeichnet, dass**
das Gebäudestruktursystem ferner einen Datenspeicher (5) umfasst, der konfiguriert ist, um die erhaltenen Signale, die die empfangene Signalstärke anzeigen, die den empfangenen Radarsignalen einer Vielzahl von Gebäudestrukturvorrichtungen (2) zugeordnet ist, zu speichern und ferner dem Anwesenheitssignal als historische Daten zugeordnet ist, und
dass der Prozessor konfiguriert ist, um das erste Analysesignal in Kombination mit dem zweiten Analysesignal ferner unter Berücksichtigung der historischen Daten auszuwerten.

13. Verfahren zum Steuern eines Gebäudestruktursystems (1), das Gebäudestruktursystem (1) umfassend:
mindestens eine Gebäudestrukturvorrichtung (2)
eine Steuervorrichtung (3) mit einem Prozessor, einschließlich Kommunikationsmittel zum Übertragen von Signalen an die mindestens eine Gebäudestrukturvorrichtung (2) und zum Empfangen von Signalen von der mindestens einen Gebäudestrukturvorrichtung (2) über ein Kommunikationsnetzwerk (4), und
das Kommunikationsnetzwerk (4) zum Verbinden der mindestens einen Gebäudestrukturvorrichtung (2) und der Steuervorrichtung (3),
das Verfahren **gekennzeichnet durch** die folgenden Schritte, die durch den Prozessor ausgeführt werden:
Analysieren eines Signals, das eine empfangene Signalstärke anzeigt, die durch einen Funkempfänger der mindestens einen Gebäudestrukturvorrichtung (2) zum Erkennen der Anwesenheit der Person basierend auf einer Änderung in einer Variation des Signals, das die empfangene Signalstärke anzeigt, bereitgestellt wird, um ein erstes Analysesignal (S2) zu erzeugen,
Analysieren eines empfangenen Radarsignals, das durch einen Radarsensor (10) der mindestens einen Gebäudestrukturvorrichtung (2) zum Erkennen der Bewegung basierend auf dem Doppler-Prinzip bereitgestellt wird, um ein zweites Analysesignal (S4) zu erzeugen,
Auswerten des ersten Analysesignals und des zweiten Analysesignals in Kombination zum Erzeugen des Anwesenheitssignals, das die Anwesenheit der Person (6) durch Bestimmen einer zugenommenen allgemeinen Wahrscheinlichkeit der Anwesenheit der Person anzeigt, wenn innerhalb eines Bewertungszeitrahmens eine Zunahme in der Wahrscheinlichkeit der Anwesenheit der Person in dem ersten Analysesignal zunimmt und auf die eine Zunahme in der Wahrscheinlichkeit der Anwesenheit der Person in dem zweiten Analysesignal (S5, S6) folgt.

## Revendications

1. Dispositif d'infrastructure de bâtiment comprenant
au moins un module actionneur (2), en particulier un module d'éclairage, qui est commandé en réponse à un signal de présence indiquant une présence d'une personne (6),
une unité de communication (9) comportant un récepteur radio,
un capteur radar (10) comprenant,
un émetteur radar et
un récepteur radar ;
dans lequel le dispositif d'infrastructure de bâtiment est
**caractérisé en ce qu'**un processeur du dispositif d'infrastructure de bâtiment est configuré pour
analyser un signal indiquant une intensité de signal reçu fournie par le récepteur radio pour détecter la présence de la personne sur la base d'un changement d'une variation du signal indiquant l'intensité de signal reçu pour générer un premier signal d'analyse, pour
analyser un signal radar reçu fourni par le capteur radar (10) pour détecter un mouvement sur la base du principe Doppler pour générer un second signal d'analyse, et pour
évaluer le premier et le second signal d'analyse en combinaison pour générer le signal de présence indiquant la présence de la personne (6) en déterminant une probabilité générale accrue de la présence de la personne si, au sein d'un délai d'évaluation, une augmentation de probabilité de présence de la personne augmente dans le premier signal d'analyse, est suivie par une augmentation de probabilité de présence de la personne dans le second signal d'analyse.

2. Système d'infrastructure de bâtiment comprenant
au moins un dispositif d'infrastructure de bâtiment (2),
un dispositif de commande (3) avec un processeur, dans lequel le dispositif de commande (3) comporte
un moyen de communication pour transmettre des signaux à l'au moins un dispositif d'infrastructure de bâtiment (2) et pour recevoir des signaux provenant de l'au moins un dispositif d'infrastructure de bâtiment (2) par l'intermédiaire d'un réseau de communication (4), et
dans lequel le dispositif de commande (3) est configuré pour commander l'au moins un dispositif d'infrastructure de bâtiment sur la base d'un signal de présence indiquant la présence d'une personne, et
le réseau de communication (4) pour relier l'au moins un dispositif d'infrastructure (2) et le dispositif de commande (3), et le système d'infrastructure de bâtiment est
**caractérisé en ce que** le processeur est configuré pour
analyser un signal indiquant une intensité de signal reçu fournie par un récepteur radio de l'au moins un dispositif d'infrastructure de bâtiment (2) pour détecter la présence de la personne sur la base d'un changement d'une variation du signal indiquant l'intensité de signal reçu pour générer un premier signal d'analyse, pour
analyser un signal radar reçu fourni par un capteur radar de l'au moins un dispositif d'infrastructure de bâtiment (2) pour détecter un mouvement sur la base du principe Doppler pour générer un second signal d'analyse, et
évaluer les premier et second signaux d'analyse en combinaison pour générer le signal de présence indiquant une présence de la personne (6) en déterminant une probabilité générale accrue de la présence de la personne si, au sein d'un délai d'évaluation, une augmentation de probabilité de présence de la personne augmente dans le premier signal d'analyse et est suivie par une augmentation de probabilité de présence de la personne dans le second signal d'analyse.

3. Système d'infrastructure de bâtiment selon la revendication 2,
**caractérisé en ce que** le récepteur radio est utilisé par une unité de communication (9) de l'au moins un dispositif d'infrastructure de bâtiment (2) pour communiquer avec l'unité de commande (3).

4. Système d'infrastructure de bâtiment selon la revendication 2 ou 3,
**caractérisé en ce qu'**une bande de fréquences de communication du récepteur radio et une bande de fréquences rayonnée du capteur radar (10) diffèrent, en particulier diffèrent d'au moins un ordre de grandeur en fréquence.

5. Système d'infrastructure de bâtiment selon l'une des revendications 2 à 4,
**caractérisé en ce que** le système d'infrastructure de bâtiment comprend une pluralité de dispositifs d'infrastructure de bâtiment (2) agencés en grille sur une zone de couverture du système d'infrastructure de bâtiment.

6. Système d'infrastructure de bâtiment selon l'une quelconque des revendications 2 à 5,
**caractérisé en ce que** le système d'infrastructure de bâtiment est un système d'éclairage (1) comprenant une pluralité de luminaires (2) en tant que dispositifs d'infrastructure de bâtiment.

7. Système d'infrastructure de bâtiment selon l'une quelconque des revendications 2 à 6,
**caractérisé en ce que** le signal indiquant une intensité de signal reçu est un signal RSSI mesuré et délivré par le récepteur radio.

8. Système d'infrastructure de bâtiment selon l'une quelconque des revendications 2 à 7
**caractérisé en ce que** le processeur est configuré pour utiliser une mise à l'échelle pour évaluer les premier et second signaux d'analyse en combinaison.

9. Système d'infrastructure de bâtiment selon l'une quelconque des revendications 2 à 8,
**caractérisé en ce que** le processeur est configuré pour utiliser un apprentissage automatique pour évaluer les premier et second signaux d'analyse en combinaison.

10. Système d'infrastructure de bâtiment selon l'une quelconque des revendications 2 à 9,
**caractérisé en ce que** le processeur est configuré pour utiliser des réseaux neuronaux pour évaluer les premier et second signaux d'analyse en combinaison.

11. Système d'infrastructure de bâtiment selon l'une quelconque des revendications 2 à 10,
**caractérisé en ce que** le processeur est configuré pour associer un facteur de pondération à chacun des premier et second signaux d'analyse pour évaluer les premier et second signaux d'analyse afin de générer le signal de présence.

12. Système d'infrastructure de bâtiment selon l'une quelconque des revendications 2 à 11,
**caractérisé en ce que** le système d'infrastructure de bâtiment comprend en outre un stockage de données (5) configuré pour stocker les signaux obtenus indiquant l'intensité de signal reçu associée aux signaux radar reçus d'une pluralité de dispositifs d'infrastructure de bâtiment (2) et associée en outre au signal de présence en tant que données historiques, et
**ce que** le processeur est configuré pour évaluer le premier signal d'analyse en combinaison avec le second signal d'analyse prenant en outre en compte les données historiques.

13. Procédé de commande d'un système d'infrastructure de bâtiment (1), le système d'infrastructure de bâtiment (1) comprenant
au moins un dispositif d'infrastructure de bâtiment (2)
un dispositif de commande (3) avec un processeur, comportant un moyen de communication pour transmettre des signaux à l'au moins un dispositif d'infrastructure de bâtiment (2) et pour recevoir des signaux provenant de l'au moins un dispositif d'infrastructure de bâtiment (2) par l'intermédiaire d'un réseau de communication (4), et
le réseau de communication (4) pour relier l'au moins un dispositif d'infrastructure de bâtiment (2) et le dispositif de commande (3),
le procédé étant **caractérisé par** les étapes suivantes exécutées par le processeur :
l'analyse d'un signal indiquant une intensité de signal reçu fournie par un récepteur radio de l'au moins un dispositif d'infrastructure de bâtiment (2) pour détecter la présence de la personne sur la base d'un changement d'une variation du signal indiquant l'intensité de signal reçu pour générer un premier signal d'analyse (S2),
l'analyse d'un signal radar reçu fourni par un capteur radar (10) de l'au moins un dispositif d'infrastructure de bâtiment (2) pour détecter un mouvement sur la base du principe Doppler pour générer un second signal d'analyse (S4),
l'évaluation du premier signal d'analyse et du second signal d'analyse en combinaison pour générer le signal de présence indiquant la présence de la personne (6) en déterminant une probabilité générale accrue de la présence de la personne si, au sein d'un délai d'évaluation, une augmentation de probabilité de présence de la personne augmente dans le premier signal d'analyse et est suivie par une augmentation de probabilité de présence de la personne dans le second signal d'analyse (S5, S6).
